# EUROPEAN PATENT SPECIFICATION

(11) **EP 1 791 428 B1**
(45) Date of publication and mention of the grant of the patent: **20.08.2008**
(21) Application number: 05784692.5
(22) Date of filing: 13.09.2005
(51) Int. Cl.: A01N 43/653

(54) **SEED DRESSING FORMULATION**
ZUSAMMENSETZUNG ZUR BEHANDLUNG VON SAATGUT
FORMULATION POUR LE TRAITEMENT DE LA SEMENCE

(30) Priority: 13.09.2004 EP 04104409
(43) Date of publication of application: 06.06.2007
(73) Proprietor: Certis Europe BV, 3604 BB Maarssen (NL)
(72) Inventor: VAN NOOTEN, Kim Margaretha Jozef, B-2350 Vosselaar (BE); VERBEECK, Guillaume Maria Jozef, B-2340 Beerse (BE); KEMPEN, Tony Mathilde Jozef, B-2340 Beerse (BE)
(74) Representative: van Loon, C.J.J.
(86) International application number: PCT/EP2005/054534
(87) International publication number: WO 2006/030006

(56) References cited:
- EP-A- 0 729 700

## Description

The present invention concerns clear water-based microemulsions comprising the antifungal agent flutriafol and their use as a seed dressing.

Seed and seedling diseases are caused by a variety of organisms such as fungi, bacteria, viruses and nematodes. The most important of these are fungi. Fungi infecting seed and seedlings destroy plant cells and tissues, prevent seed germination, or cause poor development or death of seedlings. Seed may be externally contaminated with fungal or bacterial organisms or may be internally infected. Soil, unless fumigated or sterilized, also contains fungi and other organisms that attack seed and seedlings. In order to prevent seed and seedling diseases, unsown seed is treated with a seed dressing which contains chemicals to prevent fungal attack. Seed dressings may be called "single purpose" if used to protect against fungi only; but seed dressings are often "dual purpose", in which case they protect against both fungi and insects.

Seed dressings for seed treatment are usually applied in the form of a liquid formulation when mixed with the seed. Said liquid formulation can be in the form of an aqueous suspension or emulsion, granule, wettable powder, or suspension or emulsion that is miscible, soluble or dispersable in water. Preferred formulations are flowable formulations, also known as a suspension concentrates (or SC formulations) which consist of finely milled active ingredients that are suspended in water or an organic liquid using dispersing and suspending agents to keep these solid particles apart and suspended to ensure mixing and handling ease. Many of the antifungal agents used in seed dressing have a low water solubility and can only be formulated in the form of a suspension concentrate. Seed dressings in the form of a SC formulations are usually applied to the seeds by spraying. However such SC formulations have the disadvantage that their shelf live is limited due to sedimentation or precipitation of the suspended active ingredients. Increasing the amount of dispersing and suspending agents can only postpone the occurrence of sedimentation for a brief period of time. Furthermore SC formulations are temperature sensitive and when the temperature drops the risk of sedimentation increases considerably. As soon as sedimentation of the active ingredients occurs, the SC formulations are no longer usable for seed dressing as the sediments would clog up the spraying nozzles in seed dressing equipment.

Flutriafol is the International Non Proprietary Name (INN) forα-(2-fluorophenyl)-α-(4-fluorophenyl)-1*H*-1.2.4-triazole-1-ethanol which may be represented by the formula

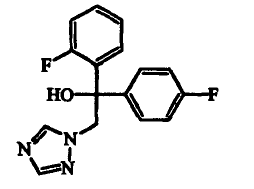

Flutriafol is a systemic triazole fungicide used against fungal pathogens in, for example, cereals, coffee, com, beets, and rape. Flutriafol is effective against the most essential seed-bome diseases in cereals as it is one of very few compounds to reach and disinfect the inner core of the seed thereby providing excellent control of embryo borne diseases, in particular bunt *(Tilletia caries)* and smuts *(Ustilago spp.).*

For seed treatment purposes flutriafol is formulated as an SC formulation which is commercially available under the trade name impact**^{®}** or Vincit^{®}. Due to its low water solubility of 130 milligram/liter [Journal of chromatography A, 947 (2002), pages 227 - 235], these commercial SC formulations suffer from the above mentioned sedimentation problems.

In European patent application EP-0,729,700 A it is disclosed that flutriafol microemulsions can be prepared by mixing flutriafol with a mixture of methyl esters of fatty acids obtained by the transesterfication of vegetable oils, an anionic surface active agent selected from the group of alkyl benzene sulfonates, alkylsulfosuccinates or their metal salts, one or more non-ionic surface active agents and water.

it has now been found that flutriafol can be formulated as a clear water-based microemulsion, as defined in claim 1 These micro-emulsions are long term storage-stable and do not show precipitation of flutriafol when the temperature drops during storage in unheated rooms. Hence the microemulsions of the present invention are also low-temperature stable at temperatures around or below freezing point.

For the purposes of this invention, the term "microemulsion" refers to a liquid dispersion, stabilized by surfactants, of two or more immiscible liquids wherein the dispersed phase consists of small droplets with an average droplet size in the range of about 10 to 200 nanometer. Such microemulsions are thermodynamically stable and clear or transparent when viewed by the naked eye.
The term "surfactant" refers to a product for reducing interfacial tension of two boundary surfaces, thereby increasing the emulsifying, spreading, dispersability or wetting properties of liquids or solids.
The term "emulsifier" refers to a surfactant used to facilitate the preparation of a dispersion of one liquid in another liquid with which it is not miscible.
The term "unsown seed" is meant to include seed at any period between the harvest of the seed and the sowing of the seed in the ground for the purpose of germination and growth of the plant.

The water-immiscible liquid is selected from the group consisting of C₁₋₄alkylacid esters of lactic acid and diC₁₋₄alkylacid esters of adipic acid, glutaric acid and succinic acids, and mixtures thereof. The alkyl groups of said esters are chosen from methyl, ethyl groups, propyl, isopropyl, butyl, n-butyl or isobutyl. In one embodiment the water-immiscible liquid is lactic acid, butyl ester. In another embodiment the water-immiscible liquid is a mixture of dimethyl adipate, dimethyl glutarate and dimethyl succinate which mixture is commercially available as Rhodiasolv RPDE^{®} from Rhodia. The amount of water-immiscible liquid can range from 100 gram/liter to 400 gram/liter, based on the mixture as a whole.

The surfactant system comprises one or more anionic surfactants and optionally one or more emulsifiers.

The anionic surfactants may be selected from the group consisting of polyarylphenol polyalkoxyether sulfates and polyarylphenol polyalkoxyether phosphates and mixtures thereof. Exemplary polyarylphenol polyalkoxyether sulfates and polyarylphenol polyalkoxyether phosphates include polyarylphenol polyethoxyether sulfates and phosphates, polyarylphenol polypropoxyether sulfates and phosphates, polyarylphenol poly(ethoxy/propoxy)ether sulfates and phosphates, and salts thereof. The term "aryl" includes, for example, phenyl, tolyl, naphthyl, tetrahydronaphthyl, indanyl, indenyl, styryl, pyridyl, quinolinyl, and mixtures thereof. The term "alkoxy" includes, for example, methoxy, ethoxy, propoxy, isopropoxy, butoxy and isobutoxy, and mixtures thereof. Exemplary polyarylphenol polyethoxyether sulfates and phosphates include distyrylphenol polyethoxyether sulfates and phosphates, and tristyrylphenol polyethoxyether sulfates and phosphates. The polyarylphenol polyalkoxyether sulfates and phosphates may have a degree of alkoxylation (e.g. ethoxylation) of between about 1 and about 50, preferably between about 2 and about 40, more preferably between about 5 and about 30. Commercially available polyarylphenol polyalkoxyether sulfates and phosphates include, for example, SOPROPHOR^{®} 4D384 (tristyrylphenyl ethoxylate sulfate) available from Rhodia, SOPROPHOR^{®} 3D33 (tristyrylphenyl ethoxylate phosphate ester) available from Rhodia, SOPROPHOR^{®} FLK (tristyrylphenol (EO) 16 phosphate potassium salt) (Rhodia), DEHSCOFIX^{®} 904 (tristyrylphenol polyethoxylated ether phosphate triethanolamine salt) (Albright &Wilson Americas, Inc.), HOE^{®} S 3475 (tristyrylphenol polyethoxylated ether phosphate triethanolamine salt) (Hoechst), and SOPROPHOR^{®} RAM/384 (tristyrylphenol polyethoxylated ether sulfate neutralized with polyethoxylated oleylamine). In other embodiments, the polyarylphenol polyalkoxyether sulfates and phosphates may be mono-arylphenol polyalkoxyether sulfates and phosphates, such as styrylphenol polyethoxyether sulfates and phosphates. A particular anionic surfactant is tristyrylphenyl ethoxylate phosphate ester (SOPROPHOR^{®} 3D33).

The anionic surfactant in the microemulsions of the invention is present in an amount ranging from 30 to 80 gram/liter, based on the mixture as a whole.

The optional emulsifiers in the surfactant system of the microemulsions of the invention are selected from the group consisting of ethoxylated castor oils containing 12-40 ethoxy units. These ethoxylated castor oils are available as Alkamuls^{®} from Rhodia, for example, Alkamuls BR^{®}, Alkamuls EL 620 LI^{®}, Alkamuls OR 10^{®}, Alkamuls OR 36^{®}, and Alkamuls OR 40^{®}. The optional emulsifier in the microemulsions of the present invention is present in an amount ranging from 15 to 40 gram/liter, based on the mixture as a whole.

The antifreezing agent can be selected from the group consisting of ethylene glycol, diethylene glycol, propylene glycol, and urea, and mixtures thereof. The preferred antifreezing agent is propylene glycol. These antifreezing agents can be present in the microemulsions in amounts of 10 to 500 gram/liter, based on the mixture as a whole.

The water used in the microemulsions is preferably soft, *i.e.* demineralised or deionized water, but hard water may also be used.

The invention provides clear water-based microemulsions for the treatment of unsown seed comprising flutriafol, a water-immiscible liquid, a surfactant system, an antifreezing agent and water, wherein the water-immiscible solvent is selected from the group consisting of C₁₋₄alkylacid esters of lactic acid and diC₁₋₄alkylacid esters of adipic acid, glutaric acid and succinic acids, and mixtures thereof.

Accordingly the invention provides a microemulsion comprising
a) flutriafol in an amount ranging from 5 to 50 gram/liter, based on the mixture as a whole;
b) a water-immiscible liquid selected from the group consisting of C₁₋₄alkylacid esters of lactic acid and diC₁₋₄alkylacid esters of adipic acid, glutaric acid and succinic acids, and mixtures thereof;
c) a surfactant system comprising one or more anionic surfactants and optionally one or more emulsifiers
   wherein the anionic surfactants are selected from the group consisting of polyarylphenol polyalkoxyether sulfates and polyarylphenol polyalkoxyether phosphates and mixtures thereof;
   and the optional emulsifiers are selected from the group consisting of ethoxylated castor oils containing 12-40 ethoxy units;
d) an antifreezing agent selected from the group consisting of ethylene glycol, diethylene glycol, propylene glycol, and urea, and mixtures thereof; and
e) water.

In a further aspect, a coloring agent such as a dye is added to the microemulsions of the present invention so that an observer can immediately determine that the seeds are treated. The presence of a coloring agent in seed dressings is required by law in many countries in order to prevent mixing of food grain with seed coated with a seed dressing. Suitable coloring agents are water soluble dyes that are approved for food or cosmetic purposes such as brilliant blue (E133, FD&C Blue 1), indigo carmine (E132, FD&C Blue 2), erythrosine (E127, FD&C Red 3), allura red (E129, FD&C Red 40), tartrazine (E102, FD&C Yellow 5), sunset yellow (FD&C Yellow 6), fast green FCF (FD&C Green 3), amaranth (E123), carmosine (E122), cochineal red (E124), red 2g (E128), patent blue V (E131) and green s (E142). These coloring agents are present in an amount ranging from 10 to 100 gram/liter, based on the mixture as a whole.

The indicated E numbers of these coloring agents refer to an European Union numbering. The FD&C numbers are assigned by the US Food & Drug Administration.

When cochineal red is used as a dye, it has been demonstrated beneficial to lower the pH of the microemulsion of the present in order to increase its colour intensity. In practice the pH is lowered to a pH ranging from 4 to 6, preferably 5, using an inorganic or organic acid. Suitable inorganic acids are hydrohalic acids, *i.e.* hydrofluoric, hydrochloric, hydrobromic and hydroiodic, sulfuric acid, nitric acid, phosphoric acid, phosphinic acid and the like. Suitable organic acids are for example, acetic, propanoic, hydroxyacetic, 2-hydroxypropanoic, 2-oxopropanoic, ethanedioic, propanedioic, butanedioic, (Z)-2-butenedioic, (E)-2-butenedioic, 2-hydroxybutanedioic, 2,3-dihydroxybutanedioic, 2-hydroxy-1,2,3-propanetricarboxylic, methanesulfonic, ethanesulfonic, benzenesulfonic, 4-methyl-benzenesulfonic, cyclohexanesulfamic, 2-hydroxybenzoic, 4-amino-2-hydroxybenzoic and the like acids.

The microemulsions of the present invention may further comprise other active ingredients, such as fungicides, bactericides, acaricides, nematocides, insecticides or herbicides, in particular fungicides or insecticides, for example so as to widen the spectrum of action or to prevent the buildup of resistance. In many cases, the addition of another active ingredient besides flutriafol results in synergistic effects, *i.e*. the activity of the mixture exceeds the activity of the individual components.

As other active ingredients, which may be used in combination with the microemulsions of the present invention there may be considered products of the following classes :

Fungicides :
2-aminobutane, 2,6-di-chloro-N-(4-trifluoromethylbenzyl)benzamide, 8-hydroxyquinoline sulphate, 2-phenyl-phenol (OPP), aldimorph, ampropylfos, anilazine, benalaxyl, benodanil, benomyl, binapacryl, biphenyl, bitertanol, blasticidin-S, bupirimate, buthiobate, calcium polysulphide, captafol, captan, carbendazim, carboxin, quinomethionate, chloroneb, chloropicrin, chlorothalonil, chlozolinate, cufraneb, cymoxanil, cyprodinil, cyprofuram, dichlorophen, diclobutrazol, diclofluanid, diclomezin, dicloran, diethofencarb, dimethirimol, dimethomorph, dinocap, diphenylamine, dipyrithion, ditalimfos, dithianon, dodine, drazoxolon, edifenphos, ethirimol, fenarimol, fenfuram, fenitropan, fenpiclonil, fenpropidin, fenpropimorph, fentin acetate, fentin hydroxide, ferbam, ferimzone, fluazinam, fludioxonil, fluoromide, flusulfamide, flutolanil, folpet, fosetyl-aluminium, fthalide, furalaxyl, furmecyclox, guazatine, hexachlorobenzene, hymexazol, imazalil, iminoctadine, iprobenfos (IBP), iprodione, isoprothiolane, kasugamycin, copper preparations such as: copper hydroxide, copper naphthenate, copper oxychloride, copper sulphate, copper oxide, oxine-copper and Bordeaux mixture, mancopper, mancozeb, maneb, mefenoxam, mepanipyrim, mepronil, metalaxyl, methasulfocarb, methfuroxam, metiram, metsulfovax, myclobutanil, nickel dimethyldithiocarbamate, nitrothal-isopropyl, nuarimol, ofurace, oxadixyl, oxamocarb, oxycarboxin, pefurazoate, pencycuron, phosdiphen, pimaricin, piperalin, polyoxin, prochloraz, procymidone, propamocarb, propineb, pyrazophos, pyrifenox, pyrimethanil, pyroquilon, pentachloronitrobenzene (PCNB), sulphur and sulphur preparations, tecloftalam, tecnazene, thiabendazole, thicyofen, thiophanate-methyl, thiram, tolclophos-methyl, tolylfluanid, triadimefon, triadimenol, triazoxide, trichlamide, tridemorph, triflumizole, triforine, validamycin A, vinclozolin, zineb, ziram; isothia- and benzisothiazolone derivatives such as, e.g. 1,2-benzisothiazolone (BIT); oxathiazines such as bethoxazin *(i.e.* 3-(benzo[b]thien-2-yl)-5,6-dihydro-1,4,2-oxathiazine, 4-oxide); strobilurines such as azoxystrobin, dimoxystrobin, fluoxastrobin, metominostrobin, pyraclostrobin, kresoxim-methyl, trifloxystrobin, and picoxystrobin; triazoles such as azaconazole, bromuconazole, cyproconazole, difenoconazole, dinicolazole, epoxiconazole, fenbuconazole, fluquinconazole, flusilazole, hexaconazole, ketoconazole, metconazole, penconazole, propiconazole, prothioconazole, simeconazole, tebuconazole, tetraconazole, and triticonazole.

Bactericides :
bronopol, dichlorophen, nitrapyrin, nickel dimethyldithiocarbamate, kasugamycin, octhilinone, furanecarboxylic acid, oxytetracyclin, streptomycin, tecloftalam, copper sulphate and other copper preparations. A preferred bactericide is streptomycin.

Insecticides/Acaricides/Nematicides :
abamectin, acephate, acetamiprid, acrinathrin, alanycarb, aldicarb, alphamethrin, amitraz, AZ 60541, azadirachtin, azinphos A, azinphos M, azocyclotin, Bacillus thuringiensis, bendiocarb, benfuracarb, bensultap, beta-cyfluthrin, bifenthrin, BPMC, brofenprox, bromophos A, bufencarb, buprofezin, butocarboxin, butylpyridaben, cadusafos, carbaryl, carbofuran, carbophenothion, carbosulfan, cartap, CGA 157 419, chloethocarb, chlorethoxyfos chlorfenvinphos, chlorfluazuron, chliormephos, chlorfenapyr, chlorpyrifos, chlorpyrifos M, cis-resmethrin, clocythrin, clofentezine, cyanophos, cycloprothrin, cyfluthrin, cyhalothrin, cyhexatin, cypermethrin, cyromazine, deltamethrin, demeton-M, demeton-S, demeton-S-methyl, diafenthiuron, diazinon, dichlofenthion, dichlorvos, dicliphos, dicrotophos, diethion, diflubenzuron, dimethoate, dimethylvinphos, dioxathion, disulfoton, edifenphos, emamectin optionally as its benzoate salt, esfenvalerate, ethiofencarb, ethion, ethiprole, ethofenprox, ethoprophos, etrimphos, fenamiphos, fenazaquin, fenbutatin oxide, fenitrothion, fenobucarb, fenothiocarb, fenoxycarb, fenpropathrin, fenpyrad, fenpyroximate, fenthion, fenvalerate, fipronil, fluazinam, flucycloxuron, flucythrinate, flufenoxuron, flufenprox, fluvalinate, fonophos, formothion, fosthiazate, fubfenprox, furathiocarb, gamma-cyhalothrin, HCH, heptenophos, hexaflumuron, hexythiazox, imidacloprid, iprobenfos, isazophos, isofenphos, isoprocarb, isoxathion, ivemectin, lambda-cyhalothrin, lindane, lufenuron, malathion, mecarbam, mervinphos, mesulfenphos, metaldehyde, methacrifos, methamidophos, methidathion, methiocarb, methomyl, metolcarb, milbemectin, monocrotophos, moxidectin, naled, NC 184, nitenpyram, omethoate, oxamyl, oxydemethon M, oxydeprofos, parathion A, parathion M, permethrin, phenthoate, phorate, phosalone, phosmet, phosphamdon, phoxim, pirimicarb, pirimiphos M, pirimiphos A, profenofos, promecarb, propaphos, propoxur, prothiofos, prothoate, pymetrozin, pyrachlophos, pyridaphenthion, pyresmethrin, pyrethrum, pyridaben, pyrimidifen, pyriproxifen, quinalphos, salithion, sebufos, silafluofen, sulfotep, sulprofos, tebufenozid, tebufenpyrad, tebupirimiphos, teflubenzuron, tefluthrin, temephos, terbam, terbufos, tetrachlorvinphos, thiafenox, thiamethoxam, thiodicarb, thiofanox, thiomethon, thionazin, thuringiensin, tralomethrin, triarathen, triazophos, triazuron, trichlorfon, triflumuron, trimethacarb, vamidothion, XMC, xylylcarb, zetamethrin. Preferred insecticides are chlorpyrifos, ethiprole, fipronil, imidacloprid and lindane.

Preferred antifungal agents to add as another active ingredient to the microemulsions of the present invention are captan, carboxin, fosetyl-aluminium, difenoconazole, diniconazole, fludioxonil, fluoxastrobin, fluquinconazole, imazalil, iprodione, mancozeb, maneb, mefenoxam, metalaxyl, oxadixyl, pentachloronitrobenzene, prochloraz, prothioconazole, pyrimethanil, simeconazole, silthiofam, tebuconazole, thiabendazole, thiophanate-methyl, thiram, triadimenol, triticonazole and tolclophos-methyl. Most preferred is imazalil present in an amount ranging from 5 to 50 gram/liter, based on the mixture as a whole.

The microemulsions of the present invention can be prepared by mixing flutriafol or the optional other active ingredients with the water-immiscible liquid until a clear solution is obtained. This solution is then mixed with the aqueous solution which already comprises the surfactant system, antifreezing agent and an optional coloring agent. The resulting mixture is then stirred using customary stirrers until a clear microemulsion is obtained.

The microemulsions of the invention can be applied either in the prepared form or can be diluted with water to a ready-to-use microemulsion. In the latter the undiluted microemulsion is referred to as a microemulsion concentrate. The microemulsions can be applied to seed as a seed dressing using customary methods, for example by spraying, atomizing or watering the unsown seed in seed dressing equipment. Hence the use of a microemulsion as a seed dressing is also provided.

The present invention also provides a seed that has been treated by the methods described above. The treated seeds of the present invention can be stored, handled, sowed and tilled in the same manner as any other treated seed. Appropriate safety measures should be taken to limit contact of the treated seed with humans, food or feed materials, water, birds, and wild or domestic animals.

The present invention also provides a method for preventing fungal damage to a seed and/or shoots and foliage of a plant grown from the seed, the method comprising treating the unsown seed with a microemulsion comprising of flutriafol, a water-immiscible liquid, a surfactant system, an antifreezing agent and water. Seeds that have been treated by this method are also provided.

### Typical formulation examples

Formulation 1

| | |
|---|---|
| Flutriafol | 20.0 g |
| Rhodiasolv RPDE^{®} | 220.0 g |
| SOPROPHOR^{®} 3D33 | 50.0g |
| ALKAMULS^{®} OR/40 | 25.0 g |
| Propylene glycol | 400.0 g |
| Demineralized water | up to 1.000 ml |

Formulation 2

| | |
|---|---|
| Flutriafol | 20.0 g |
| Rhodiasolv RPDE^{®} | 220.0 g |
| SOPROPHOR^{®} 3D33 | 50.0 g |
| ALKAMULS^{®} OR/40 | 25.0 g |
| Propylene glycol | 400.0 g |
| Cochineal red (E124) | 54.0 g |
| Lactic acid, 80% in water | 17.5 g |
| Demineralized water | up to 1.000 ml |

Formulation 3

| | |
|---|---|
| Flutriafol | 20.0 g |
| Imazalil | 25.0 g |
| Rhodiasolv RPDE^{®} | 220.0 g |
| SOPROPHOR^{®} 3D33 | 50.0 g |
| ALKAMULS^{®} OR/40 | 25.0 g |
| Propylene glycol | 400.0 g |
| Cochineal red (E124) | 54.0 g |
| Lactic acid, 80% in water | 17.5 g |
| Demineralized water | up to 1.000 ml |

Formulation 4

| | |
|---|---|
| Flutriafol | 20.0 g |
| Imazalil | 25.0 g |
| Lactic acid, butyl ester | 400.0 g |
| SOPROPHOR^{®} 3D33 | 75.0 g |
| Propylene glycol | 150.0 g |
| Cochineal red (E124) | 54.0 g |
| Lactic acid, 80% in water | 17.5 g |
| Demineralized water | up to 1.000 ml |

The formulation examples 2, 3 and 4 comprising the water soluble dye cochineal red (E124) have a pH of 5.

### Storage stability test

The storage stability of the microemulsions of the present invention has been tested at different temperatures over different periods of time.

The following physico-chemical properties were determined :
- appearance : *i.e.* colour, physical state and odour,
- pH (measured by potentiometry),
- density (measured with a KEM DA-110 natural oscillation density meter), and
- dynamic viscosity (measured by means of a Brookfield DV-III rotational viscometer - spindle SC4-18).

Storage stability was observed at the following temperatures :
- accelerated storage stability test in a thermostatically controlled cabinet at 54°± 2°C for 14 days according to the CIPAC MT 46.1 method (CIPAC = Collaborative International Pesticides Analytical Council).
- cold stability at 0°C according to the CIPAC MT 39 method. After a sample had been cooled in a thermostatically controlled cabinet at 0°± 1°C, a seed crystal of flutriafol was added. Subsequently, the sample was stored at 0°± 1°C for 7 days.
- freeze/thaw stability by cycling the temperature between -5°C and +45°C over a 24 hours cycle for 7 days
- cold storage at -20°± 2°C for 3 weeks
- storage at room temperature (22.5°± 2.5°C) for 6 weeks
- storage at 40°± 2°C for 6 weeks.

The microemulsion of Formulation example 3 has been tested in the above-described storage stability tests. The appearance of said microemulsion at the start of each storage stability test is a dark red, clear and homogeneous liquid which is nearly odourless. This appearance remained unchanged in all storage stability tests and no precipitation or sedimentation of flutriafol was observed in the cold storage tests. The sample stored at a temperature of -20°± 2°C for 3 weeks only showed minor phase separation which was reversible upon slight agitation.
The pH value of 5, density of 1.090 gram/ml at 20°± 2°C and dynamic viscosity of 15.5 mPa.s at 20°± 2°C remained unchanged in all storage stability tests.

Based on said storage stability tests, a shelf-life of 2 years can be claimed for the microemulsion of Formulation example 3.

## Claims

1. A microemulsion
a) flutriafol in an amount ranging from 5 to 50 gram/liter,
b) a water-immiscble liquid selected from the group consisting of C₁₋₄atkylacid esters of lactic add and diC₁₋₄ alkylacid esters of adipic add, glutaric acid and succinic acids, and mixtures thereof;
c) a surfactant system comprising one or more anionic surfactants wherein the anionic surfactants are selected from the group consisting of polyarylphenol polyalkoxyether sulfates and polyarylphenol polyalkoxyether phosphates and mixtures thereof,
d) an antifreezing agent selected from the group consisting of ethylene glycol, diethylene glycol, propylene glycol, and urea, and mixtures thereof, and
e) water.

2. A microemulsion as claimed in claim 1 wherein the surfactant system further comprises one or more emulsifiers selected from the group consisting of ethoxylated castor oils containing 12-40 ethoxy units.

3. A microemulsion as claimed in claim 2 wherein the emulsifier is present in an amount ranging from 15 to 40 gram/liter.

4. A microemulsion as claimed in claim 1 wherein the water-immisicible liquid is present in an amount ranging from 100 gram/liter to 400 gram/liter.

5. A microemulsion as claimed in claim 4 wherein the water-immiscible liquid is a mixture of dimethyl adipate, dimethyl glutarate and dimethyl succinate.

6. A microemulsion as claimed in claim 1 wherein the anionic surfactant is present in an amount ranging from 30 to 80 gram/liter.

7. A microemulsion as claimed in claim 6 wherein the anionic surfactant is selected from the group consisting of distyrylphenol polyethoxyether sulfates and phosphates, or tristyrylphenol polyethoxyether sulfates and phosphates.

8. Amicroemulsion as claimed In claim 7 wherein the polyarylphenol polyalkoxyether sulfates and polyarylphenol polyalkoxyether phosphates are tristyrylphenyl ethoxylate sulfate or tristyrylphenyl othoxylate phosphate ester.

9. A microemulsion as claimed in claim 1 wherein the antifreezing agents is present in an amount of 10 to 500 gram/liter.

10. A microemulsion as claimed in claim 2 further comprising another active ingredient selected from the group of fungicides, bactericides, acaricides, nematocides, insecticides and herbicides.

11. A microemulsion as claimed in claim 10 wherein the other active ingredient is the fungicide imazalil.

12. A microemulsion as claimed in claim 11 wherein imazalil is present in an amount ranging from 5 to 50 gram/liter.

13. A microemulsion as claimed in any of claims 1 to 12 further comprising a water soluble dye selected from the group consisting of brilliant blue, indigo carmine, erythrosine, allura red, tartrazine, sunset yellow, fast green, amaranth, carmosine, cochineal red, red 2g, patent blue V and green s.

14. A microemulsion as claimed in claim 14 wherein the water soluble dye is present in an amount ranging from 10 to 100 gram/liter.

15. A microemulsion as claimed in claim 14 wherein the water soluble dye is cochineal red.

16. A microemulsion as claimed in claim 15 wherein the pH of the microemulsion is ranging from 4 to 6.

17. A microemulsion as claimed in claim 16 comprising
flutriafol in an amount ranging from 5 to 50 gram/liter,
a water-immiscible liquid comprising of a mixture of dimethyl adipate, dimethyl glutarate and dimethyl succinate in an amount ranging from 100 gram/liter to 400 gram/liter,
a surfactant system comprising of the anionic surfactant tristyrylphenyl ethoxylate phosphate ester in an amount ranging from 30 to 80 gram/liter, and an emulsifier comprising of ethoxylated castor oils containing 12-40 ethoxy units in an amount ranging from 15 to 40 gram/liter,
the antifreezing agent propylene glycol in an amount ranging from 10 to 500 gram/liter,
imazalil in an amount from 5 to 50 gram/titer,
cochineal red as a water soluble dye in an amount ranging from 10 to 100 gram/liter, and
water in an amount to 1 liter.

18. A process for preparing the microemulsions according to any of claims 1 to 17 by mixing flutriafol and the optional other active ingredients with the water-immiscible liquid until a clear solution is obtained and then mixing this solution with an aqueous solution which already comprises the surfactant system, antifreezing agent and an optional coloring agent until a clear microemulsion is obtained.

19. Use of a microemulsion according to any of claims 1 to 17 as a seed dressing.

20. A method for preventing fungal damage to a seed and/or shoots and foliage of a plant grown from the seed, the method comprising treating the unsown seed with a microemulsion according to any of claims 1 to 17.

21. Seed treated with a microemulsion according to any of claims 1 to17.

## Patentansprüche

1. Eine Mikroemulsion, umfassend
a) Flutriafol in einer Menge von 5 bis 50 g/Liter;
b) eine mit Wasser nicht mischbare Flüssigkeit, ausgewählt aus der Gruppe, bestehend aus (C₁-C₄)-Alkylsäureestern von Milchsäure und Di-(C₁-C₄)-alkylsäureester von Adipinsäure, Glutarsäure und Bernsteinsäuren und Mischungen davon;
c) ein Tensidsystem, umfassend ein oder mehrere anionische Tenside, worin die anionischen Tenside ausgewählt sind aus der Gruppe, bestehend aus Polyarylphenolpolyalkoxyethersulfaten und Polyarylphenolpolyalkoxyetherphosphaten und Mischungen davon;
d) ein Gefrierschutzmittel, ausgewählt aus der Gruppe, bestehend aus Ethylenglykol, Diethylenglykol, Propylenglykol und Harnstoff und Mischungen davon; und
e) Wasser.

2. Eine Mikroemulsion wie In Anspruch 1 beansprucht, worin das Tensidsystem darüber hinaus einen oder mehrer Emulgatoren, ausgewählt aus der Gruppe, bestehend aus ethoxylierten Castorölen, umfassend 12 bis 40 Ethoxyeinheiten, umfasst.

3. Eine Mikroemulsion wie in Anspruch 2 beansprucht, worin der Emulgator in einer Menge von 15 bis 40 g/Liter zugegen ist.

4. Eine Mikroemulsion wie in Anspruch 1 beansprucht, worin die mit Wasser nicht mischbare Flüssigkeit in einer Menge von 100 g/Liter bis 400 g/Liter zugegen ist.

5. Eine Mikroemulsion wie in Anspruch 4 beansprucht, worin die mit Wasser nicht mischbare Flüssigkeit eine Mischung von Dimethyladipat, Dimethylglutarat und Dimethylsuccinat ist.

6. Eine Mikroemulsion wie in Anspruch 1 beansprucht, worin das anionische Tensid in einer Menge von 30 bis 80 g/Liter zugegen ist.

7. Eine Mikroemulsion wie in Anspruch 6 beansprucht, worin das anionische Tensid ausgewählt ist aus der Gruppe, bestehend aus Distyrylphenolpolyethoxyethersulfaten und -phosphaten oder Tristyrylphenolpolyethoxyethersulfaten und -phosphaten.

8. Eine Mikroemulsion wie In Anspruch 7 beansprucht, worin die Polyarylphenolpolyalkoxyethersulfate und Polyarylphenolpolyalkoxyetherphosphate Tristyrylphenylethoxylatsulfate oder Tristyrylphenylethoxylatphosphatester sind.

9. Eine Mikroemulsion wie In Anspruch 1 beansprucht, worin die Gefrierschutzmittel in einer Menge von 10 bis 500 g/Liter zugegen sind.

10. Eine Mikroemulsion wie in Anspruch 2 beansprucht, welche darüber hinaus einen weiteren aktiven Wirkstoff, ausgewählt aus der Gruppe von Fungiziden, Bakteriziden, Acariziden, Nematoziden, Insektiziden und Herbiziden, umfasst,

11. Eine Mikroemulsion wie in Anspruch 10 beansprucht, worin der weitere aktive Wirkstoff das Fungizid Imazalil ist.

12. Eine Mikroemulsion wie in Anspruch 11 beansprucht, worin imizalil in einer Menge von 5 bis 50 g/Liter zugegen ist.

13. Eine Mikroemulsion wie in einem der Ansprüche 1 bis 12 beansprucht, welche darüber hinaus einen wasserlöslichen Farbstoff, ausgewählt aus der Gruppe, bestehend aus Brillantblau, Indigokarmin, Erythrosin, Allura Rot (allura red), Tartrazin, Sunset Yellow, Fast-Grün, Amarant, Karmosin, Cochinealrot, Rot 2g, Patent Blau V und Grün S, umfasst.

14. Eine Mikroemulsion wie in Anspruch 13 beansprucht, worin der wasserlösliche Farbstoff in einer Menge von 10 bis 100 g/Liter zugegen ist.

15. Eine Mikroemulsion wie in Anspruch 14 beansprucht, worin der wasserlösliche Farbstoff Cochinealrot ist.

16. Eine Mikroemulsion wie in Anspruch 15 beansprucht, worin der pH-Wert der Mikroemulsion von 4 bis 6 beträgt.

17. Eine Mikroemulsion wie in Anspruch 16 beansprucht, umfassend
Flutriafol in einer Menge von 5 bis 50 g/Liter,
eine mit Wasser nicht mischbare Flüssigkeit, umfassend eine Mischung von Dimethyladipat, Dimethylglutarat und Dimethylsuccinat, in einer Menge von 100 g/Liter bis 400 g/Liter,
ein Tensidsystem, umfassend das anionische Tensid Tristyrylphenylethoxylatphosphatester in einer Menge von 30 bis 80 g/Liter und einen Emulgator, bestehend aus ethoxylierten Castorölen, enthaltend 12 bis 40 Ethoxyeinheiten, in einer Menge von 15 bis 40 g/Liter,
das Gefrierschutzmittel Propylenglykol in einer Menge von 10 bis 500 g/Liter,
imazalil in einer Menge von 5 bis 50 g/Liter,
Cochinealrot als einen wasserlöslichen Farbstoff in einer Menge von 10 bis 100 g/Liter und
Wasser in einer Menge bis 1 Liter,

18. Ein Verfahren zur Herstellung der Mikroemulsionen gemäß einem der Ansprüche 1 bis 17 durch Mischen von Flutriafol und den gegebenenfalls verwendeten anderen aktiven Wirkstoffen mit der mit Wasser nicht mischbaren Flüssigkeit bis eine klare Lösung erhalten wird und dann Mischen dieser Lösung mit einer wässrigen Lösung, welche bereits das Tensidsystem, das Gefrierschutzmittel und gegebenenfalls ein Färbemittel enthält, bis eine klare Mikroemulsion erhalten wird.

19. Verwendung einer Mikroemulsion nach einem der Ansprüche 1 bis 17 alls ein Saatgutbehandlungsmittel.

20. Ein Verfahren zum Schutz von Schäden durch Pilze auf einem Saatgut und/oder auf Austrieben und Blättern einer Pflanze, weiche aus dem Saatgut hervorgehen, wobei das Verfahren umfasst das Behandeln des nicht gesäten Saatgutes mit einer Mikroemulsion gemäß einem der Ansprüche 1 bis 17.

21. Saatgut, behandelt mit einer Mikroemulsion gemäß einem der Ansprüche 1 bis 17.

## Revendications

1. Micro-émulsion comprenant :
a) du flutriafol à raison de 5 grammes/litre à 50 grammes/titre ;
b) un liquide non miscible à l'eau choisi dans le groupe constitué par les esters alkyliques en C₁ à C₄ de l'acide lactique et les esters di(alkyliques en C₁ à C₄) de l'acide adipique, de l'acide glutarique et de l'acide succinique, et leurs mélanges ;
c) un système tensio-actif comprenant un ou plusieurs tensio-actifs anioniques où les tensioactifs anioniques sont choisis dans le groupe constitué par les sulfates de polyarylphénol polyalcoxylé et les phosphates de polyarylphenol polyalcoxylé et leurs mélanges ;
d) un agent antigel choisi dans le groupe constitué par l'éthylèneglycol le diéthylèneglycol, le propylèneglycol et l'urée, et leurs mélanges ; et
e) de l'eau.

2. Micro-émulsion selon la revendication 1, dans laquelle le système tensio-actif comprend en outre un ou plusieurs émulsifiants choisis dans le groupe constitué par l'huile de ricin éthoxylée contenant 12 à 40 motifs éthoxy.

3. Micro-émulsion selon la revendication 2, dans laquelle l'émulsifiant est présent à raison de 15 grammes/litre à 40 grammes/litre.

4. Micro-émulsion selon la revendication 1, dans laquelle le liquide non miscible à l'eau est présent à raison de 100 grammes/litre à 400 grammes/litre.

5. Micro-émulsion selon la revendication 4, dans laquelle le liquide non miscible à l'eau est un mélange d'adipate de diméthyle, de glutarate de diméthyle et de succinate de diméthyle.

6. Micro-émulsion selon la revendication 1, dans laquelle le tensio-actif anionique est présent à raison de 30 grammes/litre à 80 grammes/litre.

7. Micro-émulsion selon la revendication 6, dans laquelle le tensio-actif anionique est choisi dans le groupe constitué par les sulfates et phosphates de distyrylphénol polyéthoxylé, ou les sulfates et phosphates de tristyrylphénol polyéthoxylé.

8. Micro-émulsion selon la revendication 7, dans laquelle les sulfates de polyarylphénol polyalcoxylé et les phosphates de polyarylphénol polyalcoxylé sont les esters sulfate de tristyrylphényle éthoxylé ou phosphate de tristyrylphényle éthoxylé.

9. Micro-émulsion selon la revendication 1, dans laquelle l'agent antigel est présent à raison de 10 grammes/litre à 500 grammes/litre.

10. Micro-émulsion selon la revendication 2, comprenant en outre un autre principe actif choisi dans le groupe des fongicides, bactéricides, acaricides, nématocides, insecticides et herbicides.

11. Micro-émulsion selon la revendication 10, dans laquelle l'autre principe actif est le fongicide imazalil.

12. Micro-émulsion selon la revendication 11, dans laquelle l'imazalil est présent à raison de 5 grammes/litre à 50 grammes/litre.

13. Micro-émulsion selon l'une quelconque des revendications 1 à 12, comprenant en outre un colorant hydrosoluble choisi dans le groupe constitué par le bleu de Coomassie, le carmin d'indigo, l'érythrosine, le rouge allura, la tartrazine, le jaune orangé S, le vert malachite, l'amarante, la carmosine, le rouge cochenille A, le rouge 2g, le bleu patenté V et le vert s.

14. Micro-émulsion selon la revendication 13, dans laquelle le colorant hydrosoluble est présent à raison de 10 grammes/litre à 104 grammes/litre,

15. Micro-émulsion selon la revendication 14, dans laquelle le colorant hydrosoluble est le rouge cochenille A.

16. Micro-émulsion selon la revendication 15, dans laquelle le pH de la micro-émulsion est dans la gamme allant de 4 à 6.

17. Micro-émulsion selon la revendication 16, comprenant :
- du flutriafol à raison de 5 grammes/litre à 50 grammes/litre ; ,
- un liquide non miscible à l'eau comprenant un mélange d'adipate de diméthyle, de glutarate de diméthyle et de succinate de diméthyle à raison de 100 grammes/litre à 400 grammes/litre ;
- un système tensio-actif comprenant le tensio-actif anionique ester phosphate de tristyrylphényle éthoxylé à raison de 30 grammes/litre à 80 grammes/titre, et un émulsifiant comprenant de l'huile de ricin éthoxylée contenant 12 à 40 motifs éthoxy à raison de 15 grammes/litre à 40 grammes/litre ;
- l'agent antigel propylèneglycol à raison de 10 grammes/litre à 500 grammes/litre ;
- l'imazalil à raison de 5 grammes/litre à 50 grammes/litre ;
- le rouge cochenille A en tant que colorant hydrosoluble à raison de 10 grammes/litre à 100 grammes/litre ; et
- de l'eau en quantité suffisante pour 1 litre.

18. Procédé de préparation des micro-émulsions selon l'une quelconque des revendications 1 à 17, en mélangeant le flutriafol et les autres principe actifs éventuels avec le liquide non miscible à l'eau jusqu'à obtenir une solution limpide, puis en mélangeant cette solution avec une solution aqueuse qui comprend déjà le système tensio-actif, l'agent antigel et un agent colorant éventuel jusqu'à obtenir une micro-émulsion transparente.

19. Utilisation d'une micro-émulsion selon l'une quelconque des revendications 1 à 17, en tant qu'enrobage de graine.

20. Procédé pour éviter les dommages fongiques sur une graine et/ou les pousses et le feuillage d'une plante issue de la graine, le procédé comprenant l'étape consistant à traiter la graine n'ayant pas été semée avec une micro-émulsion selon l'une quelconque des revendications 1 à 17.

21. Graine traitée avec une micro-émulsion selon l'une quelconque des revendications 1 à 17.
